# EUROPEAN PATENT APPLICATION

(11) **EP 3 171 099 A2**
(43) Date of publication of application: **24.05.2017**
(21) Application number: 16199872.9
(22) Date of filing: 21.11.2016
(51) Int. Cl.: F25B 1/00

(54) **REFRIGERATION SYSTEM AND METHOD**

(30) Priority: 19.11.2015 GB 201520362
(71) Applicant: G.A.H. (Refrigeration) Limited, Ipswich, Suffolk IP3 9SI (GB)
(72) Inventor: Peak, Bob, Ipswich, Suffolk IP3 9SJ (GB)
(74) Representative: Williams Powell

(57) **Abstract**

A refrigeration system (10) and method are disclosed. The refrigeration system (10) includes an evaporator (20) and an evaporation controller (30), the evaporation controller is arranged to control operation of the evaporator (20) in dependence on conditions associated with the refrigeration system. The evaporator controller is arranged to monitor conditions associated with the refrigeration system and, upon detecting conditions in excess of predefined operating conditions for the refrigeration system reduce performance of the evaporator.

## Description

### Field of the Invention

The present invention relates to a refrigeration system and method and in particular a refrigeration system and method that is particularly suitable for mobile refrigeration such as in vehicles.

### Background to the Invention

A standard refrigeration system has a condenser and an evaporator. Refrigerant flows around the system in a closed loop with the condenser side normally operating at a high pressure and the evaporator side at low pressure.

A typical evaporator is formed as a heat pipe or similar, for example from of a back-and-forth length of copper tubing to which metal fins have been attached. Liquid refrigerant is lowered in pressure and enters the evaporator. As the pressure reduces the refrigerant turns from liquid to gas and absorbs heat by cooling the copper tubing and fins. Heat is removed from the nearby air and causes lowering of the air temperature in the nearby space.

The refrigerant is passed under pressure, typically because it is driven by a compressor, to the condenser which acts generally in the opposite manner to the evaporator, removing heat from the refrigerant and transferring it to the surrounding air. During this process, the temperature of the high pressure refrigerant drops until it condenses into a liquid.

Refrigerant fluids are selected so as to have properties such that reducing the pressure to which a liquid refrigerant is subjected will cause its temperature to drop sharply. One way this can be accomplished is by passing the liquid through a flow-restrictor such as a specialised valve or a section of small-bore tubing. As the liquid passes from the high-pressure zone to the low-pressure zone through the flow restrictor, its temperature falls and, its circuit complete, is ready to pass through the evaporator again.

One issue with conventional refrigeration systems is that they work well under predictable conditions. There is, by necessity, high and low pressure zones within the system and the system must be designed accordingly with suitable pipework, joints and components.

A refrigeration system designed to provide refrigeration to a particular sized space under a range of known conditions can be designed accordingly. However, as soon as any of these variables changes, the suitability of the system reduces.

### Statement of Invention

According to an aspect of the present invention, there is provided a refrigeration system including an evaporator and an evaporation controller, the evaporation controller being arranged to control operation of the evaporator in dependence on conditions associated with the refrigeration system, the evaporator controller being arranged to monitor conditions associated with the refrigeration system and, upon detecting conditions in excess of predefined operating conditions for the refrigeration system reduce performance of the evaporator.

For example, the evaporator may include a fan and the evaporation controller includes a fan controller to slow fan speed on detecting excessive operating conditions. Additionally or alternatively, the evaporator may be temporarily modified in other ways to reduce performance under excessive operating conditions.

The evaporator may include a fan, the evaporation controller including a fan controller configured to slow fan speed upon detection of conditions in excess of the predetermined operating conditions.

The evaporation controller may be configured to reduce performance of the evaporator upon detection of conditions in excess of the predetermined operating conditions by inhibiting one or more functions of the evaporator.

The refrigeration system may further comprise a temperature sensor arranged to communicate with the evaporation controller to provide temperature readings associated with a load space of the refrigeration system, the evaporation controller being configured to reduce performance of the evaporator upon receiving temperature readings above a predetermined threshold.

The refrigeration system may further comprise a temperature sensor arranged to communicate with the evaporation controller to provide temperature readings associated with an ambient temperature about the refrigeration system, the evaporation controller being configured to reduce performance of the evaporator upon receiving temperature readings above a predetermined threshold.

The refrigeration system may further comprise a pressure sensor arranged to communicate with the evaporation controller to provide pressure readings associated with the refrigeration system, the evaporation controller being configured to reduce performance of the evaporator upon receiving pressure readings above a predetermined threshold.

Upon the pressure readings reaching or exceeding a predetermined pressure level, the evaporation controller may be arranged to progressively reduce fan speed.

Upon the pressure readings dropping below the predetermined pressure level, the evaporation controller may be arranged to progressively increase the fan speed until at full speed.

The evaporation controller may be arranged to reduce exposed surface area of a heat pipe of the evaporator to reduce its performance.

The evaporation controller may be arranged to reduce the operational length of a heat pipe of the evaporator to reduce its performance.

The evaporation controller may be a retro-fit component and include an interface to connect to and control an existing refrigeration system.

The refrigeration system may further comprise an interface to connect to one or more existing sensors of refrigeration system.

The evaporation controller may include a power controller to interface with a power supply of a fan of the evaporator and control supply of power to the fan to reduce performance of the evaporator.

According to another aspect of the present invention, there is provided a method of controlling performance of an evaporator of a refrigeration system, comprising: monitoring conditions associated with the refrigeration system; and,
upon detecting conditions in excess of predefined operating conditions for the refrigeration system reducing performance of the evaporator.

If the evaporator includes a fan, the method may include slowing fan speed upon detection of conditions in excess of the predetermined operating conditions.

Embodiments of the present invention seek to control evaporator fans to temporarily reduce fridge capacity while conditions are unfavourable. For example, where a transport refrigeration system can be turned on to cool a vehicle at any time, it happens on occasion that a system is started around mid-day/midafternoon in the height of summer when the ambient temperature and that of the refrigerated load space are very high. This gives rise to very high pressures in the fridge system for a short period. It is usual to design around this eventuality by reducing the size of the evaporator heat exchanger so this cannot happen. However, in so doing the capacity of the system under more normal conditions is limited. In embodiments of the present invention, by reducing the effectiveness of the evaporator (for example by slowing the evaporator fan) in these extreme conditions this issue is avoided. Slowing the fan effectively reduces the performance (size) of the evaporator while the load space temperature is being reduced. Once the load space temperature is down to a more normal level, the high system pressure will have been reduced and the evaporator fan speed can be returned back to full speed.

### Detailed Description

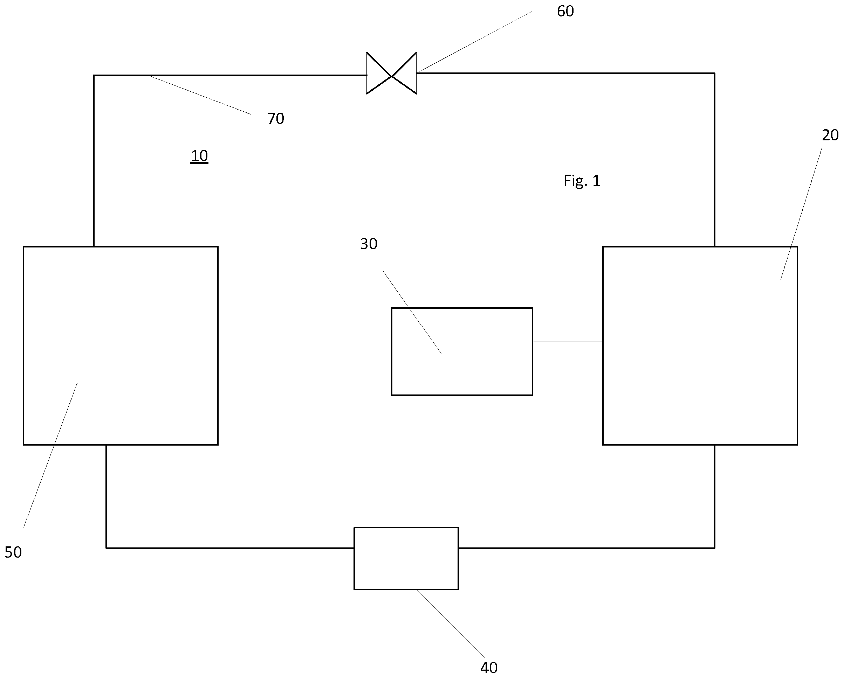

Figure 1 is a schematic diagram of a refrigeration system according to an embodiment of the present invention.

The refrigeration system 10 includes an evaporator 20 and an evaporation controller 30. The refrigeration system 10 also includes a compressor 40, a condenser 50 and a flow restrictor 60 which are all connected in a circuit by piping 70.

In normal operation, the refrigeration system operates as described above, liquid refrigerant passes through the evaporator 20 and extracts heat from the environment, it turns from liquid to gas and is pumped by the compressor 40 to the condenser where the heat is dumped and the gas cools and returns back to a liquid. On passing through the flow restrictor, the refrigerant pressure is lowered before passing once again through the evaporator.

Under normal operating conditions, the refrigeration system 10 operates in a conventional way. However, the evaporation controller 30 is configured to monitor conditions associated with the refrigeration system (such as operating conditions) and, in the event of detecting excessive operating conditions, change operation of the evaporator as needed.

In one embodiment, the evaporator controller is arranged to monitor conditions associated with the refrigeration system and, upon detecting conditions in excess of predefined operating conditions for the refrigeration system reduce performance of the evaporator.

The definition of conditions in excess of predefined operating conditions will vary from system to system and also be dependent on the sensors or data feeds available to the evaporation controller. In the most simplistic embodiment, the evaporation controller may include a temperature sensor or receive a data feed or other trigger from such a temperature sensor. Upon the monitored temperature exceeding a predetermined threshold, the evaporation controller is arranged to reduce performance of the evaporator.

In addition or alternatively to a temperature sensor, the system may include, or provide a data feed from, a pressure sensor associated with the refrigeration circuit.

For example, the evaporator may include a fan and the evaporation controller includes a fan controller to slow fan speed on detecting excessive operating conditions. Additionally or alternatively, the evaporator may be temporarily modified in other ways such as by reducing exposed surface area of a heat pipe to reduce performance under excessive operating conditions.

Preferred embodiments of the present invention seek to control evaporator fans to temporarily reduce fridge capacity while conditions are unfavourable. For example, where a transport refrigeration system can be turned on to cool a vehicle at any time, it happens on occasion that a system is started around mid-day/midafternoon in the height of summer when the ambient temperature and that of the refrigerated load space are very high. This gives rise to very high pressures in the fridge system for a short period. It is usual to design around this eventuality by reducing the size of the evaporator heat exchanger so this cannot happen. However, in so doing the capacity of the system under more normal conditions is limited. In embodiments of the present invention, such design constraints can be avoided. By reducing effectiveness of the evaporator (for example by slowing the evaporator fan) in these extreme conditions this issue is avoided and the system can be designed for optimal "normal" use rather than needing to accommodate extreme use cases.

Slowing the fan effectively reduces the performance (size) of the evaporator while the load space temperature is being reduced. Once the load space temperature is down to a more normal level, the high system pressure will have been reduced and the evaporator fan speed can be returned back to full speed.

Various mechanisms are possible to control the evaporator. For example, if the fan is to be controlled then the evaporation controller could, for example, monitor pressure within the refrigeration circuit and at a predetermined pressure level, the fan speed is progressively reduced to attempt to maintain the maximum pressure. Once the pressure begins to drop below that level (as the system conditions begin to trend more favourably) then the fan speed is progressively increased back up to full speed. Instead of progressive reduction, it could be stepped or set at a particular speed associated with a pressure threshold.

It will be appreciated that the evaporation controller could be provided as an addon or retro-fit component to refrigeration systems. For example, it could include its own sensors for monitoring or could include a connector or other interface for connection to existing monitors/sensors. Similarly, it could be arranged to be connected between a power source and the evaporator fan so as to control speed through varying the power or could have a connector or other arrangement for accessing fan control systems.

## Claims

1. A refrigeration system including an evaporator and an evaporation controller, the evaporation controller being arranged to control operation of the evaporator in dependence on conditions associated with the refrigeration system, the evaporator controller being arranged to monitor conditions associated with the refrigeration system and, upon detecting conditions in excess of predefined operating conditions for the refrigeration system reduce performance of the evaporator.

2. The refrigeration system of claim 1, wherein the evaporator includes a fan, the evaporation controller including a fan controller configured to slow fan speed upon detection of conditions in excess of the predetermined operating conditions.

3. The refrigeration system of claim 1 or 2, wherein the evaporation controller is configured to reduce performance of the evaporator upon detection of conditions in excess of the predetermined operating conditions by inhibiting one or more functions of the evaporator.

4. The refrigeration system of any preceding claim, further comprising a temperature sensor arranged to communicate with the evaporation controller to provide temperature readings associated with a load space of the refrigeration system, the evaporation controller being configured to reduce performance of the evaporator upon receiving temperature readings above a predetermined threshold.

5. The refrigeration system of any preceding claim, further comprising a temperature sensor arranged to communicate with the evaporation controller to provide temperature readings associated with an ambient temperature about the refrigeration system, the evaporation controller being configured to reduce performance of the evaporator upon receiving temperature readings above a predetermined threshold.

6. The refrigeration system of any preceding claim, further comprising a pressure sensor arranged to communicate with the evaporation controller to provide pressure readings associated with the refrigeration system, the evaporation controller being configured to reduce performance of the evaporator upon receiving pressure readings above a predetermined threshold.

7. The refrigeration system of claim 6 when dependent on claim 2, wherein upon the pressure readings reaching or exceeding a predetermined pressure level, the evaporation controller is arranged to progressively reduce fan speed.

8. The refrigeration system of claim 7, wherein upon the pressure readings dropping below the predetermined pressure level, the evaporation controller being arranged to progressively increase the fan speed until at full speed.

9. The refrigeration system of any preceding claim, wherein the evaporation controller is arranged to reduce exposed surface area of a heat pipe of the evaporator to reduce its performance.

10. The refrigeration system of any preceding claim, wherein the evaporation controller is arranged to reduce the operational length of a heat pipe of the evaporator to reduce its performance.

11. The refrigeration system of any preceding claim, wherein the evaporation controller is a retro-fit component and includes an interface to connect to and control an existing refrigeration system.

12. The refrigeration system of claim 11, further comprising an interface to connect to one or more existing sensors of refrigeration system.

13. The refrigeration system of any preceding claim, wherein the evaporation controller includes a power controller to interface with a power supply of a fan of the evaporator and control supply of power to the fan to reduce performance of the evaporator.

14. A method of controlling performance of an evaporator of a refrigeration system, comprising:
monitoring conditions associated with the refrigeration system; and,
upon detecting conditions in excess of predefined operating conditions for the refrigeration system reducing performance of the evaporator.

15. The method of claim 14, wherein the evaporator includes a fan, the method including slowing fan speed upon detection of conditions in excess of the predetermined operating conditions.
